# EUROPEAN PATENT APPLICATION

(11) **EP 1 102 093 A1**
(43) Date of publication of application: **23.05.2001**
(21) Application number: 00929906.6
(22) Date of filing: 29.05.2000
(51) Int. Cl.: G02B 5/30, G02B 5/04, G02B 27/28, G02F 1/1337

(54) **POLARIZED LIGHT BEAM SPLITTER AND POLARIZED LIGHT ILLUMINATOR COMPRISING THE SAME**

(30) Priority: 31.05.1999 JP 15151899
(71) Applicant: USHIO DENKI KABUSHIKI KAISYA, Tokyo, 100-0004 (JP)
(72) Inventor: Suzuki, Shinji, Yokohama-shi Kanagawa 222-0033 (JP); Mizuno, Osamu, Yokohama-shi Kanagawa 224-0007 (JP); Goto, Manabu, Yokohama-shi, Kanagawa 227-0035 (JP)
(74) Representative: Tomerius, Isabel, Dr. Dipl.-Chem.
(86) International application number: JP0003454
(87) International publication number: WO0073824

(57) **Abstract**

A polarized light beam splitter ideal for application to a polarized light reflecting device in which the transmission rate does not undergo serial deterioration even with light of 200 nm to 340 nm wavelength can be provided.

Rectangular prism 1 is disposed in a sealed container formed by frame 3 and optical transmission window 4 comprising quartz plate, etc., and inorganic dielectric multi-layer film 2 is deposited on the junction surface of rectangular prism 1. Aforementioned container is filled with liquid L such as pure water or liquid compounds containing fluorine that have virtually the same refractive index as that of prism material, that transmit light of 200 nm to 340 nm wavelength, and whose transmission rates do not suffer serial deterioration. In addition, inlet 7a and exit 7b for aforementioned liquid L are mounted in frame 3 to permit circulation of liquid L for cooling. A polarizing device having a large area can be constructed by disposing a plurality of prismatic rods within aforementioned container.

## Description

### Technical Field of Invention

The present invention concerns a polarizing device to obtain ultraviolet polarized light having short wavelength as well as a polarized light irradiator using said polarizing device.

### Technical Background

Liquid-crystal display devices usually have a two-plate substrate structure. A drive device to drive liquid crystals (for example, thin-film transistor), a liquid-crystal drive electrode formed from transparent conductor film and alignment layer that aligns liquid crystals in a specific direction are formed in one substrate. Light-proof film termed a black matrix or, in the case of a color liquid-crystal display device, a color filter as well as aforementioned alignment layer are formed on the other substrate.

Usually, alignment layer is formed by a method of processing termed rubbing on the surface of a thin film such as polyimide resin followed by formation of fine grooves in a specific direction. Liquid-crystal molecules then become aligned in specific directions along these fine grooves. Specifically, a state of arranged liquid-crystal orientation is reached.

The surface of aforementioned thin film is rubbed by a cloth wound about a rotating roller in rubbing processing, a method that is extensively used. However, a decline in the yield is unavoidable since irritants such as dirt, static electricity, scratches, etc., develop.

The technique in which liquid crystals are arranged without rubbing has been proposed recently to solve aforementioned problems (the technique of arranging the orientation of liquid crystals without rubbing is termed "nonrubbing"). The following types of nonrubbing techniques are available.
Polarized light is irradiated on a thin film such as polyimide resin and only polymers in a specific direction of the thin film undergo photochemical reaction and structural change. Liquid-crystal molecules are arranged in a specific direction just as in rubbing processing (arranged orientation of liquid crystals) by so doing. Such a technique of orientation using light is termed "optical alignment technology".

Optical alignment layer which is aligned by light often undergoes photochemical reaction and structural change due to short wavelength ultraviolet light of 200 nm to 340 nm.

Light from a light source is irradiated on alignment layer via a polarizing device in equipment that irradiates polarized light using aforementioned optical alignment technology.

Various types of polarizing devices are available, but the most common is one in which resin film with a polarization function is attached to a glass plate. However, resin film has low heat resistance and its functions deteriorate due to temperature rise when struck by intense light. Furthermore, resin film undergoes chemical change as a result of ultraviolet light of 200 nm to 340 nm wavelength, and that brings about deterioration of the polarized light characteristics. Accordingly, no practical polarizing device for use in a photoirradiation device for optical alignment has become available.

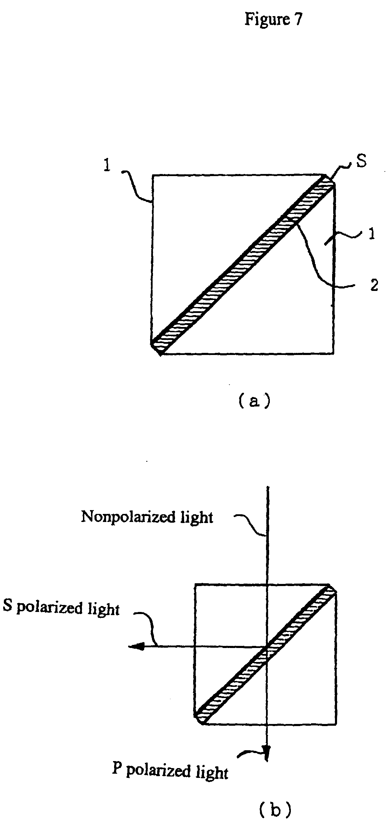

The polarized light beam splitter is a polarizing device that is resistant to heat and to strong light. Inorganic dielectric multi-layer film 2 is deposited as a polarized light separating film on a slope of rectangular prism 1 in a polarized light beam splitter 10, as shown in Figure 7 (a). The slopes of two rectangular prisms 1 are bonded by adhesive S that is applied over the entire surfaces.

Adhesive S having virtually the same refractive index as that of the material comprising rectangular prism 1 is selected so that adhesive S and rectangular prism 1 are optically integrated. For example, adhesive having a refractive index of 1.5 ± 0.2, which is close to the refractive index of quartz that is about 1.5, would be selected when the material comprising rectangular prism 1 is quartz (the display of the thickness of adhesive S in Figure 7 (a) is exaggerated).

Nonpolarized light incident on aforementioned polarized light beam splitter 10 is separated into P polarized light and S polarized light by inorganic dielectric multi-layer film 2 shown in Figure 7(b). P polarized light is transmitted directly through polarized light beam splitter 10 while S polarized light is reflected. Rectangular prism 1 is resistant to heat and strong light since it is made of quartz glass. Furthermore, inorganic dielectric multi-layer film 2 that is the polarized light separating film is resistant to heat and strong light since it is also composed of inorganic material. Furthermore, inorganic dielectric multi-layer film 2 can be made of material having good polarized light separation characteristics at a predetermined wavelength (a low extinction ratio, for example, the proportion of S polarized light in transmitted P polarized light is low).

The polarized light beam splitter comprises prisms that are bonded, and adhesive is used to bond them. However, optical alignment layer is often aligned by ultraviolet light of 200 nm to 340 nm wavelength, as indicated above. When aforementioned polarized light beam splitter 10 is used in alignment layer optical alignment of liquid-crystal display devices, the polarized light beam splitter is often incident with ultraviolet light of 200 nm to 340 nm wavelength.

Incidentally, the transmission rate of ultraviolet light declines and ultraviolet light is absorbed and serially deteriorated when adhesive S that bonds rectangular prism 1 of a polarized light beam splitter is irradiated with ultraviolet light of 200 nm to 340 nm wavelength.

Accordingly, desired optical power of polarized light cannot be provided to alignment layer material. At present, no adhesive is on the market that does not suffer deterioration of the transmission rate even following irradiation of ultraviolet light of 200 nm to 340 nm wavelength. For this reason, polarized light beam splitters cannot be used as polarizing devices for use in photoirradiation devices for optical alignment.

Aforementioned problems do not arise if no adhesive is used in the production of a polarized light beam splitter. However, the following problems arise if no adhesive is used.

An air layer always develops between surfaces in contact if the slopes of two prisms are mated and attached. The refractive index of air is 1.0, which is smaller than the refractive index (about 1.5) of quartz glass if it is used as the prisms constituent. Accordingly, incident light is reflected at the interface of the glass and air layers, and the desired optical power is not transmitted through the polarized light beam splitter.

Specifically, actions are required to ensure that light is not reflected at the interface by eliminating an air layer between two prisms and by selecting adhesive whose refractive index approaches that of quartz glass, not merely adhesive to attach two prisms.

The present invention was devised in light of aforementioned circumstances. The first objective of the present invention is to provide a polarized light beam splitter whose transmission rate does not suffer serial deterioration even due to light at 200 nm to 340 nm wavelength.

The second objective of the present invention is to provide a polarized light reflecting device using aforementioned polarized light beam splitter as a polarizing device.

### Disclosure of Invention

The present invention solves aforementioned problems as follows.
(1) An inorganic dielectric multi-layer film is formed at the junction surface of the prisms in a polarized light beam splitter formed from two or more prisms, and aforementioned prisms are joined via a liquid.
(2) An inlet and an outlet for aforementioned liquid are mounted, and aforementioned liquid circulates within aforementioned polarized light beam splitter to cool it.
(3) An inorganic dielectric multi-layer film is formed at the junction surface of a polarized light reflecting device that completes optical alignment by reflecting polarized light off a substrate on which an optical alignment layer is formed, and a polarizing device comprising a polarized light beam splitter joining two or more prisms via a liquid is mounted in the optical path of polarized light. Liquid crystals are optically aligned by reflecting polarized light via aforementioned polarized light beam splitter off a substrate on which an alignment layer is formed.

In claim 1 of the present invention, an inorganic dielectric multi-layer film is formed at the junction surface of prisms, as in aforementioned (1), and light of 200 nm to 340 nm wavelength is transmitted through liquid (material which does not create an air layer) to prevent reflection at the bonding surface of prisms. Since the liquid in use does not induce serial deterioration of the transmission rate due to light of aforementioned wavelength, a polarized light beam splitter that is ideal for optical alignment processing of the alignment layer of liquid-crystal display devices can be obtained.

Liquids having virtually the same refractive index (preferably within a range of ± 0.2 of the refractive index of the prism material) as that of the prism material would be desirable as aforementioned liquids. Concrete examples include pure water and liquid compounds containing fluorine.

In claim 2 of the present invention, an inlet and an outlet for aforementioned liquid were mounted in aforementioned (1), and aforementioned liquid is circulated within the polarized light beam splitter to cool it. Accordingly, overheating of the polarized light beam splitter can be prevented. Furthermore, deterioration of the characteristics caused by the presence of oil or the development of mold when pure water is present can be prevented.

In claim 3 of the present invention, a polarized light reflecting device that completes optical alignment by reflecting polarized light off a substrate on which an alignment layer is formed has an inorganic dielectric multi-layer film formed at the junction surface, and a polarizing device comprising a polarized light beam splitter with two or more prisms joined via liquid is used. Accordingly, the polarizing device can have a thin, planar structure, and enlargement of the polarizing device can be prevented. Furthermore, serial deterioration of the polarizing device can be prevented.

### Brief Description of Drawings

Figure 1 is a diagram showing the structure of a polarized light beam splitter in the first embodiment of the present invention.
Figure 2 is a diagram showing a variant of the first embodiment.
Figure 3 is a diagram showing the structure of a polarized light beam splitter in a second embodiment of the present invention.
Figure 4 is a diagram showing the structure of a polarized light beam splitter in a third embodiment of the present invention.
Figure 5 is a diagram showing the fourth embodiment in which a polarized light beam splitter pursuant to the present invention is applied to a polarized light reflecting device.
Figure 6 is a diagram showing a variant of the fourth embodiment.
Figure 7 is a diagram showing the structure of a conventional polarized light beam splitter.

### Best Mode of Implementing the Present Invention

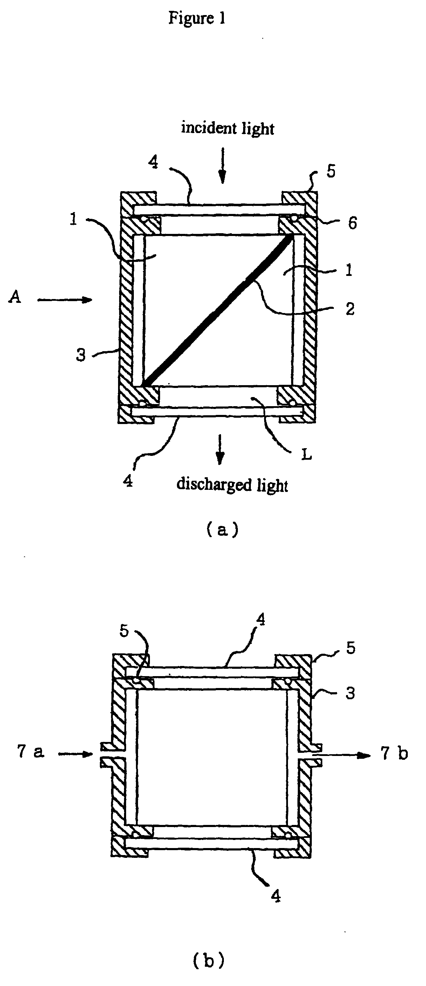

Figure 1 is a diagram showing the profile structure of a polarized light beam splitter in a first embodiment of the present invention. (b) of the diagram is a cutaway drawing in direction A of (a).

As shown in the diagram, polarized light beam splitter 10 of this embodiment is structured such that rectangular prisms 1 are disposed in a sealed container comprising frame 3 and optical transmission window 4, and rectangular prisms 1 are attached by frame 3.

On the other hand, inorganic dielectric multi-layer film 2 is deposited at the junction surface of rectangular prisms 1 just as in aforementioned Figure 7, and rectangular prisms 1 are disposed so that liquid L discussed below fills the gap between them. The space between frame 3 and optical transmission window 4 is sealed by O ring 6, and window wedge 5 is attached to press optical transmission window 4 against frame 3. In addition, quartz plates, etc., through which ultraviolet light is transmitted are used as the material of optical transmission window 4 that is formed at the surfaces of incident light and of output light.

Aforementioned container is filled with liquid having virtually the same refractive index as that of prism material, that transmits light of 200 nm to 340 nm wavelength, and whose transmission rate does not suffer serial deterioration.

Pure water (refractive index = 1.3) or Fomblin oil (refractive index = about 1.29), a compound containing fluorine whose transmission characteristics do not deteriorate due to ultraviolet light, can be used as aforementioned liquid L when the material comprising rectangular prism 1 is quartz (refractive index = about 1.5).

It is better for the refractive index of liquid L to approach the refractive index of the glass material of rectangular prism 1. For example, when using polarized light beam splitter 10 as the polarizing device of a polarized light reflecting device, adequate utility is confirmed if the range of the refractive index ± 0.2 of the refractive index of the glass material comprising rectangular prism 1.

Reflection at the interface of adhesive becomes great when the refractive index of liquid L becomes too great relative to the refractive index of the glass material comprising rectangular prism 1 and the proportion of P polarized light contained in the light reflected from the polarizing device decreases. Furthermore, the angle within the polarizing device changes and the air of light incident on the polarizing device as well as the angle of light that is output changes. Disadvantages arise as a result, including some shift of the irradiation range from the desired position.

The use of aforementioned liquid L having a refractive index close to that of the glass material of rectangular prism 1 would be desirable.

Tap water and mineral oil are some examples of liquids that are unsuitable for liquid L. Tap water is unsuited because the ions contained within absorb ultraviolet light while mineral oil is unsuited because of its refractive index as well as because its transmission characteristics deteriorate due to ultraviolet light.

Both inlet 7a and exit 7b for aforementioned liquid L are mounted in frame 3 of polarized light beam splitter 10 from Figure 1, as shown in (b), to permit the flow of liquid L within the container housing rectangular prism 1. This provides the following advantages.
[1] The polarized light beam splitter is heated by incident light, but it can be cooled by the liquid. This prevents the temperatures of the constituent parts and of the overall device from rising excessively.
[2] Any contaminants within the container can be discharged.
[3] There is no concern over oil deterioration or of mold attributable to microorganisms contained in water since fresh oil or pure water are provided. Any decline in the optical transmission rate of a polarizing device caused by such contaminants can be prevented.

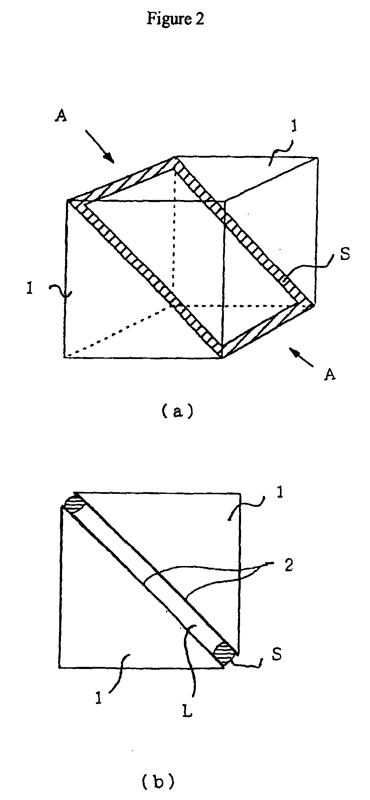

A variant of the embodiment in Figure 1 has adhesive S applied to the edges of the junction surface of rectangular prism 1 to form a structure that seals aforementioned liquid L in the middle, as shown in Figure 2. Virtually no ultraviolet light is irradiated on the edges of quartz glass but even if the transmission rate of ultraviolet light should deteriorate, it would occur at the edges which would have little effect on the transmission rate of ultraviolet light in the irradiation range.

Incidentally, the area of liquid-crystal substrates has been increasing year by year. Means must be taken to permit irradiation of polarized light over a broad area to accommodate this. For then that reason, a large polarized light beam splitter is necessary, but the manufacture of a large quartz prism is difficult, very expensive and raises the overall cost of the device.

To solve aforementioned problems, prismatic rods are arrayed as stated in the gazette of Japanese Kokai Publication Hei-5-19208, and these are joined via liquid L as shown in aforementioned first embodiment.

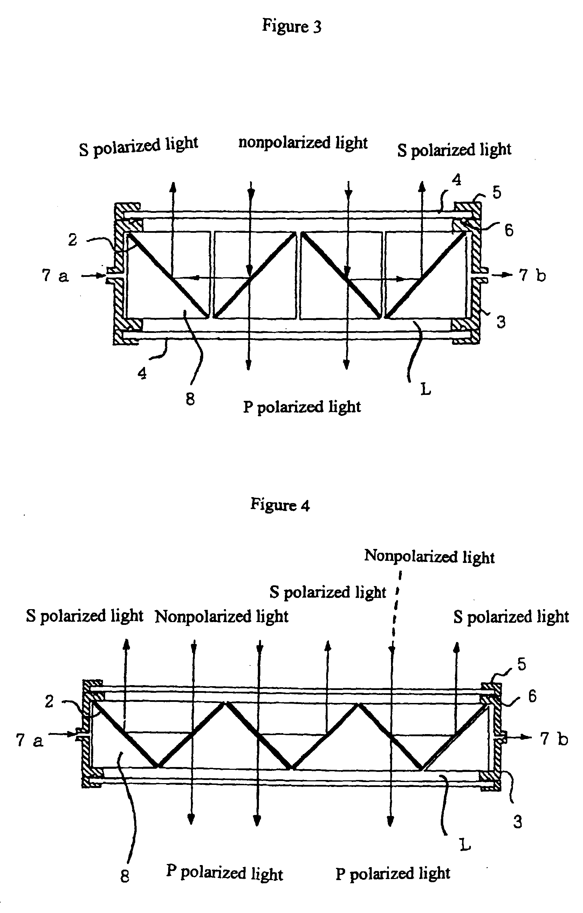

Figures 3 and 4 are diagrams showing the profile structure of a polarized light beam splitter in a second and third embodiment of the present invention in which prismatic rods are arrayed as noted above.

Those structures which are identical with or corresponding to those in the example shown in aforementioned Figure 1 are designated by the same notation. A plurality of prismatic rods 8 are disposed in the container sealed by frame 3 and optical transmission window 4 in the second and third embodiments of the present invention.

Figure 3 shows an example in which a plurality of prismatic rod 8 pairs are disposed in aforementioned container. Inorganic dielectric multi-layer film 2 is deposited on one junction surface of the pair of prismatic rods 8 just as in the first embodiment, and the prismatic rods 8 are disposed so that liquid L fills the gap between them. The space between frame 3 and optical transmission window 4 is sealed by O ring 6 and window wedge 5 is attached to lock optical transmission window 4 in frame 3. Furthermore, quartz plate, etc., that transmits ultraviolet light is used as the material of window 4 that is formed on the surface of light incidence and discharge. Aforementioned container is filled with liquid L that has virtually the same refractive index as that of the prism material in the first embodiment, that transmits light of 200 nm to 340 nm wavelength, and whose transmission rate does not undergo serial deterioration.

Figure 4 is a diagram showing another disposition example of prismatic rods. Just as in Figure 3, inorganic dielectric multi-layer film 2 is deposited on one of the junction surfaces of prismatic rods 8 and prismatic rods 8 are disposed so that liquid L fills the gaps between them. Aforementioned container is filled with liquid L that has virtually the same refractive index as that of the prism material in the first embodiment, that transmits light of 200 nm to 340 nm wavelength, and whose transmission rate does not undergo serial deterioration.

In polarized light beam splitter 10 having aforementioned structure, nonpolarized light that is incident from the optical incident surface is separated into P polarized light and S polarized light by inorganic dielectric multi-layer film 2 as shown in the diagram. The P polarized light is directly transmitted through polarized light beam splitter 10 while S polarized light is reflected off the light source side as shown in the diagram.
Both inlet 7a and exit 7b for aforementioned liquid L are mounted in frame 3 of the second and third embodiments of polarized light beam splitter 10, just as in the first embodiment as shown in the diagrams, to permit the flow of liquid L within the container housing rectangular prism 1. This provides the following advantages.

An embodiment using a polarized light beam splitter of the present invention as the polarizing device of the polarized light reflecting device is explained next.

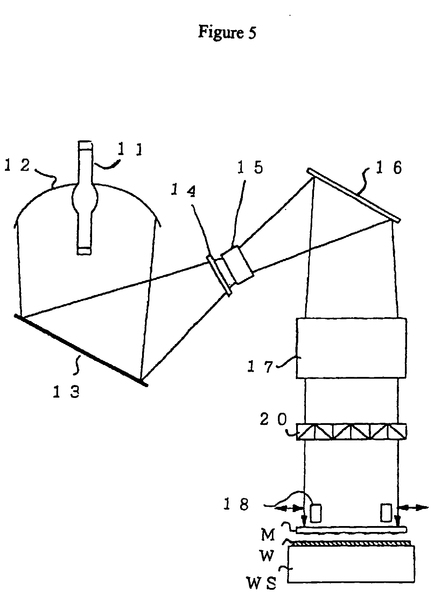

Figure 5 is a diagram showing the fourth embodiment of the present invention in which a polarized light beam splitter shown in aforementioned second embodiment (hereinafter abbreviated polarizing device) is applied to a polarized light reflecting device.

In Figure 5, reference number 11 denotes a discharge lamp (hereinafter abbreviated lamp) such as an ultra-high pressure mercury lamp that discharges light containing ultraviolet light. The light containing ultraviolet light that is discharged by lamp 11 is focused by elliptical focus mirror 12, is reflected by a first plane mirror 13, and is then incident on integrator 15 via shutter 14 when shutter 14 is opened.

Light that is output from integrator 15 is reflected by second plane mirror 16, is converted into parallel light by collimator lens 17 and is then incident to polarizing device 20 shown in second embodiment.

Polarizing device 20 separates nonpolarized light into P polarized light and S polarized light as mentioned above and then transmits P polarized light.

On the other hand, workpiece W upon which an alignment layer is formed is laid on workpiece stage WS, and mask M as well as alignment microscope 18 are disposed on workpiece W.

When polarized light is irradiated on a prescribed region of workpiece W and optical alignment is carried out, the alignment mark (not illustrated) inscribed on mask M and the workpiece alignment mark (not illustrated) inscribed on workpiece W are observed in advance by alignment microscope 18 with aforementioned shutter 14 closed, and mask M is aligned with workpiece W.

Following aforementioned alignment, aforementioned shutter 14 is opened and P polarized light that is output from polarizing device 20 is irradiated on a prescribed region of workpiece through mask M to complete optical alignment processing of an alignment layer of workpiece W as a function of the mask pattern.

Aforementioned mask M and alignment microscope 18 are unnecessary when optical alignment processing is carried out over the entire surface of the alignment layer of workpiece W. Polarized light that is output from polarizing device 20 is irradiated on the alignment layer of workpiece W to complete optical alignment processing.

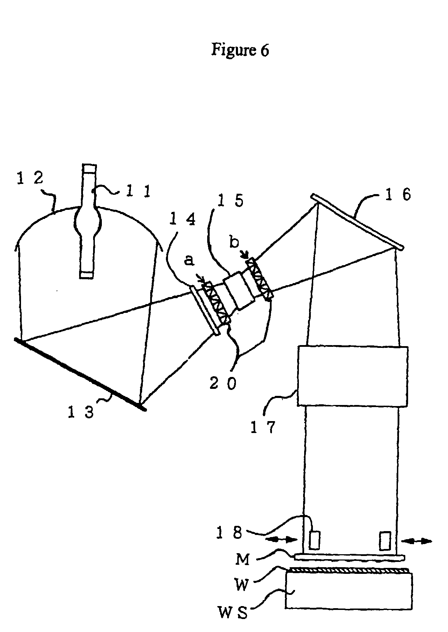

Polarizing device 20 is disposed between collimator lens 17 and workpiece W in Figure 5, but the installed position of polarizing device 20 is not restricted to the position shown in Figure 5. It may be disposed at any position a, b as shown in Figure 6. Mounting of integrator 15 at adjacent positions a, b has the advantage of permitting a small polarizing device since the focused luminous flux is small.

The proportion of P polarized light contained in the light that is output can be increased if a lens is mounted on the incident side of polarizing device 20 and if parallel light is incident on polarizing device 20 when polarizing device 20 is disposed near integrator 15.

The following effects can be realized in the present invention as explained above.
(1) A polarizing device that transmits light of 200 nm to 340 nm wavelength and whose transmission rate does not suffer serial deterioration even due to light at 200 nm to 340 nm wavelength can be implemented since an inorganic dielectric multi-layer film is formed on the junction surface in a polarized light beam splitter formed from two or more prisms that are joined via a liquid whose refractive index is virtually identical with the refractive index of said prisms, for example, pure water or a liquid compound containing fluorine.
(2) The liquid and prism are optically integrated since prisms are joined by aforementioned liquid, and no air is present at the junction interface. For this reason, light that is incident at the junction interface is not reflected.
(3) Overheating of the polarized light beam splitter can be prevented by circulating aforementioned pure water or liquid within the container of the polarized light beam splitter, and decline in the transmission rate of ultraviolet light due to deterioration of the characteristics associated with contaminants, mold developing in pure water or oil can be prevented.
(4) A thin, flat structured polarizing device can be formed by using a plurality of prisms that are combined even in the case of a polarized light reflecting device that irradiates a large area, and enlargement of the polarizing device can be prevented.

### Industrial Field of Invention

The polarized light reflecting device pursuant to the present invention can be used in the formation of alignment layers that align liquid crystals in a specific direction.

## Claims

1. A polarized light beam splitter formed by two or more prisms in which inorganic dielectric multi-layer film is formed at the junction surface of the prisms and in which aforementioned prisms are joined via liquid.

2. The polarized light beam splitter of Claim 1 in which an inlet and a discharge port for aforementioned liquid are mounted in the polarized light beam splitter and in which aforementioned liquid is circulated within the polarized light beam splitter to effect cooling.

3. A polarized light beam splitter which carries out optical alignment by irradiation of polarized light on a substrate on which alignment layer is formed, wherein
inorganic dielectric multi-layer film is formed at the junction surface, a polarizing device formed from a polarized light beam splitter in which two or more prisms are joined via liquid is mounted in the optical path of polarized light, and
optical alignment of liquid crystals is carried out by irradiating polarized light via aforementioned polarized light beam splitter on the substrate on which an alignment layer is formed.
